Europäisches Patentamt

European Patent Office

Office européen des brevets

(11) Veröffentlichungsnummer: **0 164 087 B1**

(12) **EUROPÄISCHE PATENTSCHRIFT**

(45) Veröffentlichungstag der Patentschrift: 27.02.91

(51) Int. Cl.5: **C01B 25/237**

(21) Anmeldenummer: 85106798.3

(22) Anmeldetag: 03.06.85

(54) Verfahren zur Reduzierung des Schwefelsäuregehaltes und des Gehaltes an Verunreinigungen in Nassverfahrensphosphorsäure.

(30) Priorität: 08.06.84 DE 3421297

(43) Veröffentlichungstag der Anmeldung:
11.12.85 Patentblatt 85/50

(45) Bekanntmachung des Hinweises auf die
Patenterteilung:
27.02.91 Patentblatt 91/09

(84) Benannte Vertragsstaaten:
BE DE FR NL SE

(56) Entgegenhaltungen:
BE-A- 791 820
FR-A- 1 472 520
GB-A- 1 155 957

CHEMICAL ABSTRACTS, Band 78, Nr. 6, 12.
Februar 1973, Seite 134, Zusammenfassung
32162f, Columbus, Ohio, US; & JP-B-72 15
461 (MITSUBISHI CHEMICAL INDUSTRIES
CO., LTD) 09-05-1972

CHEMICAL ABSTRACTS, Band 95, Nr. 14, 5.
Oktober 1981, Seite 128, Zusammenfassung
117730r, Columbus, Ohio, US; & JP-A-81 41
815 (MITSUI TOATSU CHEMICALS, INC.)
18-04-1981

(73) Patentinhaber: **BASF Aktiengesellschaft**
**Carl-Bosch-Strasse 38**
**D-6700 Ludwigshafen(DE)**

(72) Erfinder: **Ex, Guido**
**Von de Wiellei 180**
**B-2130 Brasschaat(BE)**
Erfinder: **Pirotte, Roland**
**J. Van Rijswijcklaan 247**
**B-2020 Antwerpen(BE)**
Erfinder: **Engelmann, Jacques**
**Hennepstraat 15**
**B-2060 Merksem(BE)**
Erfinder: **Vandersypen, Herman**
**Ter Borcht 38**
**B-2130 Brasschaat(BE)**
Erfinder: **van Gestel, Jozef**
**Dr. J. Boossenaertsstraat 2**
**B-2180 Kalmthout(BE)**

## Beschreibung

Vorliegende Erfindung betrifft ein Verfahren zur Reduzierung des $SO_4$-Ge-haltes und des Gehaltes an Verunreinigungen in Naßverfahrensphosphorsäure.

Zur Herstellung von Rohphosphat-Aufschlußlösungen (Naßverfahrensphosphor-säure) wird bekanntlich Rohphosphat mit einer ca. 60 bis 70 gew.%igen Schwefelsäure aufgeschlossen, wobei nach Abfiltrieren des Gipses beim Dihydratverfahren eine Phosphorsäure entsteht, die etwa bis zu 30 Gew.% $P_2O_5$ enthält. Diese Phosphorsäure wird üblicherweise aufkonzentriert auf Gehalte von 52 bis 56 Gew.% $P_2O_5$. Aus der US-C 3 481 700 ist es bekannt, diese Aufkonzentrierung in mehreren Schritten durchzuführen. Zunächst konzentriert man auf einen Gehalt von 38 bis 46 Gew.% $P_2O_5$, kühlt dann die Säure auf 20 bis 50° C, rührt die gekühlte Säure 4 bis 12 Stunden lang, um sie dann weitere 12 bis 24 Stunden ruhen zu lassen, um feste Verunreinigungen niederzuschlagen, von denen die Säure anschließend abgetrennt wird. Bei diesen Verunreinigungen handelt es sich im wesentlichen um Silicium, Fluor, Alkalimetalle, Erdalkalimetalle, Eisen und Aluminium enthaltende Verbindungen wechselnder Zusammensetzung. Die so gereinigte Säure wird dann in einem letzten Verfahrensschritt auf 52 bis 56 Gew.% $P_2O_5$ aufkonzentriert.

Um einen guten Aufschlußgrad und ein gut filtrierbares Calciumsulfat-Dihydrat zu erhalten, muß die Schwefelsäure im Überschuß über die stöchiometrisch erforderliche Menge eingesetzt werden. Der Überschuß an Schwefelsäure muß so eingestellt werden, daß die nach Abfiltrieren des Gipses erhaltene Phosphorsäure 0,09 bis 0,15 t freie Schwefelsäure pro t $P_2O_5$ enthält.

Dieser Überschuß an Schwefelsäure bleibt in der Phosphorsäure und ist wertlos, bzw. wirkt sich als Ballaststoff bei der Weiterverarbeitung der Phosphorsäure ungünstig aus. Aus diesen Gründen sollte der Überschuß an Schwefelsäure möglichst gering gehalten werden, er kann aber aus den oben angeführten Gründen einen bestimmten Mindestwert nicht unterschreiten.

In der GB-A- 1 155 957 wird ein Verfahren zur Herstellung praktisch sulfatfreier Naßverfahrensphosphorsäure beschrieben, das darin besteht, daß man den $P_2O_5$-Gehalt zunächst auf über 38 Gew.% erhöht und die so konzentrierte Phosphorsäure bei Temperaturen von 45 bis 95° C mit Calciumoxid, Calciumcarbonat oder Calciumphosphat behandelt und das ausgefällte Calciumsulfat entfernt.

Ein weiterer Nachteil liegt darin begründet, daß sowohl über die für den Aufschluß benötigte Schwefelsäure als auch über das Rohphosphat selbst Schwermetalle in die Phosphorsäure gelangen, die zum Teil wegen ihrer umweltschädigenden bzw. toxischen Wirkungen unerwünscht sind und die über die Phosphorsäure in die daraus hergestellten Endprodukte gelangen. Als störende Schwermetalle seien u.a. Quecksilber, Cadmium, Kupfer, Blei und Arsen genannt.

Besonders beim Einsatz von Schwefelsäure, die über sulfidische Erze gewonnen worden ist als auch beim Einsatz von Abfallschwefelsäure, die aus anderen Produktionen stammt, können sich in der erzeugten Phosphorsäure besonders hohe Anteile an diesen unerwünschten Schwermetallen wiederfinden.

Es hat daher auch nicht an Vorschlägen gefehlt, die sich mit der Entfernung dieser Schwermetalle aus der Phosphorsäure befassen. So ist in der japanischen Auslegeschrift 26 605/81 ein Verfahren zur Beseitigung dieser Schwermetalle beschrieben, das darin besteht, daß man der Phosphorsäure-Lösung eine flüssige Mischung einer Calcium-Verbindung und eines wasserlöslichen Sulfides zugibt und den dabei gebildeten Niederschlag anschließend abtrennt. Als Calcium-Verbindungen werden Calciumsalze wie Calciumcarbonat, Calciumhydroxid, Calciumchlorid und Calciumsulfid genannt, die in solchen Mengen eingesetzt werden, daß das Molverhältnis Ca : $SO_4$ > 0,5 und vorzugsweise > 1 ist. Dieses Verfahren hat den Nachteil, daß der in der Phosphorsäure enthaltene Schwefelsäureanteil für die Produktion von Phosphorsäure verloren ist. Darüber hinaus müssen bei diesem Verfahren auch noch die anderen störenden Verunreinigungen, die bei der Konzentrierung der Aufschlußsäure ausfallen, in gesonderten Arbeitsgängen entfernt werden. Diese Verunreinigungen bestehen im wesentlichen aus silicium-, fluorid-, alkali-, erdalkalimetall-, eisen- und aluminiumhaltigen Verbindungen wechselnder Zusammensetzung.

In der BE-A- 791 820 ist ferner beschrieben, aus Naßverfahrensphosphorsäure zwecks Entfernung des Arsens ein in der Säure lösliches Sulfid zuzugeben.

Der vorliegenden Erfindung lag daher die Aufgabe zugrunde, ein Verfahren bereitzustellen, bei dem in einem Verfahrensgang der Gehalt der Naßverfahrensphosphorsäure an freier Schwefelsäure unter gleichzeitiger Ausnutzung dieses Gehaltes zum Aufschluß weiteren Rohphosphates erniedrigt und die in der Phosphorsäure enthaltenen Verunreinigungen auf Basis Silicium, Fluorid, Alkalimetallen, Erdalkalimetallen, Eisen und Aluminium enthaltenden Verbindungen weitgehend entfernt werden. Der vorliegenden Erfindung lag weiterhin die Aufgabe zugrunde, ein Verfahren bereitzustellen bei dem, falls erforderlich und gewünscht, in dem gleichen Verfahrensgang auch die in der Naßverfahrensphosphorsäure enthaltenen Schwermetalle entfernt werden.

Es wurde gefunden, daß diese Aufgabe dadurch gelöst werden kann, daß man

a) die Naßverfahrensphosphorsäure, die einen $P_2O_5$-Gehalt von maximal 30 Gew.% aufweist auf einen Gehalt von 33 bis 38 Gew.% $P_2O_5$ eindampft,

b) der so eingedampften Säure Rohphosphat in solcher Menge zusetzt, daß das Gewichtsverhältnis von gelöstem $SO_4^-$ : $P_2O_5$ in der Säure nach beendeter Reaktion auf maximal 0,045 herabgesetzt wird,

c) Rohphosphat und Säure bei Temperaturen von 80 bis 95 °C mit eineinander umsetzt,

d) anschließend die Reaktionsmischung auf Temperaturen von 15 bis 40 °C abkühlt und

e) schließlich die Feststoffe abtrennt.

Zur Durchführung des erfindungsgemäßen Verfahrens geht man von Naßverfahrensphosphorsäure aus, die üblicherweise nach Abtrennung des Gipses, eine $P_2O_5$-Konzentration von 27 bis 30 Gew.% aufweist. Der Gehalt an freier Schwefelsäure entspricht einem $SO_4$ : $P_2O_5$-Verhältnis von 0,09 bis 0,12.

Anschließend wird die eingedampfte Naßverfahrensphosphorsäure mit Rohphosphat versetzt und bei Temperaturen von 80 bis 95 °C umgesetzt. Hierdurch wird u.a. weiteres Calcium-Sulfat und Phosphorsäure gebildet, so daß nach der späteren Abtrennung der Feststoffe in der erhaltenen Phosphorsäure-Lösung das Verhältnis von $SO_4^-$ : $P_2O_5$ gegenüber der Ausgangslösung erniedrigt ist. Die Menge an Rohphosphat wird so bemessen, daß in der Endlösung dieses Gewichtsverhältnis maximal 0,045, vorzugsweise 0,01 bis 0,04 beträgt. Je nach der Mahlfeinheit des Rohphosphates und der angewendeten Temperatur wird die Lösung 2 bis 4 Stunden zur Vervollständigung des Nachaufschlusses bei dieser Temperatur belassen. Zweckmäßig setzt man Rohphosphat mit einer Korngröße von unter 1 mm ein.

Anschließend wird die Lösung auf Temperaturen von 15 bis 40 °C abgekühlt. Dabei fällt weiteres Calciumsulfat aus, sowie Verbindungen, die im wesentlichen aus Si-, F, Erdalkali und Alkalimetallen enthaltenden Verbindungen wechselnder Zusammensetzung bestehen. Damit diese Niederschläge in gut abtrennbarer Form anfallen, ist es zweckmäßig, die Abkühlung innerhalb eines Zeitraumes von 6 bis 36 Stunden, vorzugsweise 15 bis 25 Stunden vorzunehmen.

Gemäß einem weiteren Merkmal der vorliegenden Erfindung können neben den genannten Verunreinigungen, falls gewünscht, auch die in der Naßver fahrensphosphorsäure etwa noch enthaltenen Verunreinigungen an Schwermetallen auf einfache Weise entfernt werden, indem man während der Abkühlung oder nach der Abkühlung der Reaktionsmischung Sulfidionen liefernde Substanzen zusetzt, durch die die in ihr enthaltenen Schwermetallionen als Sulfide gefällt werden. Zweckmäßig erfolgt dieser Zusatz bei Temperaturen unterhalb 50 °C. Als sulfidionen-liefernde Verbindungen kommen neben den Alkali- und Erdalkalisulfiden, wie $Na_2S$ , $K_2S$ und CaS auch Schwefelwasserstoff, Alkalithiosulfate und Phosphor-schwefel-Verbindungen in Betracht. Auch Thioharnstoffe und Thioacetamide sind geeignet.

Nach der Abkühlung bzw. nach der Sulfidfällung werden die in der Reaktionsmischung enthaltenen Feststoffe, gegebenenfalls nach Zugabe eines Flockungsmittels, abgetrennt.

Etwa in der Reaktionsmischung noch vorhandenes überschüssiges Sulfid kann durch Zugabe eines Oxidationsmittels, z.B. Wasserstoffperoxid, zerstört werden. Es kann aber auch mittels eines durchgeleiteten Gasstromes oder Dampf gestrippt werden.

Das erfindungsgemäße Verfahren gestattet es, in einem Verfahrensgang sowohl die bei der Konzentrierung und späteren Abkühlung ausfallenden schlammartigen Niederschläge, als auch den in der Naßverfahrensphosphorsäure enthaltenen Gehalt an freier Schwefelsäure zu reduzieren und gleichzeitig dazu auszunutzen, weiteres Rohphosphat unter Bildung weiterer Phosphorsäure aufzuschließen, was gleichbedeutend ist mit einer Senkung der Einsatzstoffkosten des Rohphosphataufschlusses bei gleichzeitiger Gewinnung einer reineren und konzentrierteren Phosphorsäure. Die nach dem erfindungsgemäßen Verfahren erhaltenen Phosphorsäurelösungen lassen sich auf die üblichen Gehalte von 50 bis 56 Gew.% $P_2O_5$ aufkonzentrieren. In den so erhaltenen Phosphorsäuren sind die Nachfällungen so stark reduziert, daß es sich um eine transport- und lagerfähige Säure handelt. Ein weiterer Vorteil des erfindungsgemäßen Verfahrens besteht darin, daß man, falls gewünscht, etwa in der Naßverfahrensphosphorsäure enthaltene Verunreinigungen an Schwermetallen entfernen kann, wozu lediglich während oder nach der Abkühlung der Reaktionsmischung eine Sulfidionen-liefernde Verbindung zugesetzt wird, ohne daß sonst an dem Verfahrensgang etwas geändert werden muß. Es gelingt auf diese Weise, eine Phosphorsäure-Lösung zu erhalten, die ohne weiteres bezüglich ihres Schwermetallgehaltes auf phosphathaltige Futtermittel aufgearbeitet werden kann, nachdem sie z.B. vorher entfluoriert worden ist.

Ein weiterer Vorteil des erfindungsgemäßen Verfahrens liegt darin begründet, daß für den Aufschluß des Rohphosphates auch schwermetallhaltige Rohphosphate und Abfall-Schwefelsäuren oder Schwefelsäuren, die über das Rösten von Erzen erhalten worden sind, eingesetzt werden können, d.h. daß man bei der Wahl des Rohstoffes sehr flexibel sein kann.

Die in den Beispielen genannten Prozentangaben sind Gewichtsprozente.

Beispiel 1

A) 1000 kg einer Naßverfahrensphosphorsäure mit einem Gehalt von 29,47 % $P_2O_5$, 3,21 % $SO_4^{--}$, 2,13 % $F^-$ wird bei einer Temperatur von 95 bis 97 °C bei einem Druck von 530 mbar eingedampft.

Die Konzentration an $P_2O_5$ in der eingedampften Säure beträgt 35,58 %. In diese Säure werden 83 kg Rohphosphat mit einer Korngröße von 95 % < 1 mm eingearbeitet und die Suspension 2 Stunden lang bei 90 °C gerührt. Das Rohphosphat enthält 32,2 % $P_2O_5$.

Anschließend wird die Suspension innerhalb von 20 Stunden auf 25 °C abgekühlt, mit Flokkungsmitteln versetzt und dann die Feststoffe abfiltriert.

Die erhaltene Phosphorsäure enthält 38,38 % $P_2O_5$, 0,54 % $SO_4^{--}$ und 1,11 % $F^-$ ($SO_4^{--}$ :$P_2O_5$ = 0,014).

B) 1000 kg einer Naßverfahrensphosphorsäure der in Beispiel 1A genannten Zusammensetzung (29,47 % $P_2O_5$, 3,21 % $SO_4^{--}$, 2,13 % $F^-$) wird bei einer Temperatur von 95 bis 97 °C bei einem Druck von 530 mbar eingedampft. Die Konzentration an $P_2O_5$ in der eingedampften Säure beträgt 39,21 % $P_2O_5$. Die Säure wurde wie in Beispiel 1 beschrieben bei 90 °C mit Rohphosphat (83 kg) umgesetzt.

Die Suspension wird anschließend innerhalb 20 Stunden auf 25 °C abgekühlt. Die Feststoffe setzen sich nicht ab, selbst ein Zusatz von Flokkungsmitteln führt zu keiner Ausbildung eines filtrierbaren Niederschlags. Die Gewinnung einer rückstandsfreien Phosphorsäure durch Filtration oder Dekantation ist nicht möglich.

Beispiel 2

1000 kg einer Naßverfahrensphosphorsäure der in Beispiel 1 genannten Zusammensetzung, die darüber hinaus noch 39 ppm $Cd^{+2}$, 20 ppm $Hg^{+2}$, 25 ppm $Pb^{+2}$, 49 ppm $AS^{+3}$ und 33 ppm $Cu^{+2}$ enthält, wird wie in Beispiel 1 be schrieben, auf einen $P_2O_5$-Gehalt von 35,58 % eingedampft, mit Rohphosphat versetzt, bei 90 °C gerührt und innerhalb von 20 Stunden auf 25 °C abgekühlt.

Abweichend von den Bedingungen des Beispiels 1 werden jedoch bei Unterschreiten einer Temperatur von 35 °C 18,9 kg $Na_2S.9H_2O$ in die Suspension eingerührt.

Nach Erreichen einer Temperatur von 20 °C werden die Feststoffe abfiltriert. Die resultierende Phosphorsäure weist folgende Gehalte auf: 38,38 % $P_2O_5$, 0,54 % $SO_4^{--}$, 1,11 % $F^-$, 0,030 % $S^{--}$, 7,9 ppm $Cd^{+2}$, 0,032 ppm $Hg^{+2}$, 7 ppm $Pb^{+2}$, 0,4 ppm $As^{+3}$ und 2 ppm $Cu^{+2}$.

Beispiel 3

1000 kg einer Naßverfahrensphosphorsäure der im Beispiel 2 genannten Zusammensetzung, wird wie in Beispiel 1 beschrieben auf eine $P_2O_5$-Gehalt von 35,05 % eingedampft, mit 83 kg Rohphosphat versetzt, bei 90 °C gerührt und innerhalb von 20 Stunden auf 25 °C abgekühlt.

Abweichend von den Bedingungen des Beispiels 2 wurde bei Unterschreiten einer Temperatur von 35 °C eine Lösung von 1,81 kg $Na_2S$ . 9 $H_2O$ + 0,56 kg $P_2S_5$ + 10 kg $H_2O$ in die Suspension eingerührt.

Nach 7 1/2 Stunden wurden die Feststoffe abfiltriert. Die resultierende Phosphorsäure weist folgende Gehalte auf: 37,32 % $P_2O_5$, 0,18 % $SO_4^{--}$, 1,60 % $F^-$, 0,9 ppm $Cd^{+2}$; 0,0007 ppm $Hg^{+2}$; 0,7 ppm $Pb^{+2}$; 0,2 ppm $As^{+3}$; 1,4 ppm $Cu^{+2}$.

Ansprüche

1. Verfahren zur Reduzierung des Gehaltes an Schwefelsäure in Naßverfahrensphosphorsäure und der in ihr enthaltenen Verunreinigungen, dadurch gekennzeichnet, daß man

a) die Naßverfahrensphosphorsäure, die einen $P_2O_5$-Gehalt von maximal 30 Gew.% aufweist auf einen Gehalt von 33 bis 38 Gew.% $P_2O_5$ eindampft,

b) der so eingedampften Säure Rohphosphat in solcher Menge zusetzt, daß das Gewichtsverhältnis von gelöstem $SO_4^-$:$P_2O_5$ in der Säure nach beendeter Reaktion auf maximal 0,045 herabgesetzt wird,

c) Rohphosphat und Säure bei Temperaturen von 80 bis 95 °C miteinander umsetzt,

d) anschließend die Reaktionsmischung auf Temperaturen von 15 bis 40 °C abkühlt und

e) schließlich die Feststoffe abtrennt.

2. Verfahren nach Anspruch 1, dadurch gekennzeichnet, daß der Abkühlvorgang 6 bis 36 Stunden dauert.

3. Verfahren nach Ansprüchen 1 bis 2, dadurch gekennzeichnet, daß das Rohphosphat eine Korngröße unter 1 mm aufweist.

4. Verfahren nach Ansprüchen 1 bis 3, dadurch gekennzeichnet, daß während der Abkühlung oder anschließend daran der Reaktionsmischung eine Sulfidionen-liefernde Verbindung zugesetzt wird.

**Claims**

1. A process for the reduction of the content of sulfuric acid in wet-process phosphoric acid and of the impurities contained in the latter, wherein
   a) the wet-process phosphoric acid, which has a maximum $P_2O_5$ content of 30% by weight, is evaporated to a content of from 33 to 38% by weight $P_2O_5$,
   b) crude phosphate is added, in such an amount that the dissolved $SO_4:P_2O_5$ ratio by weight in the acid after the reaction is complete is reduced to a maximum of 0.045, to the acid evaporated in this way,
   c) crude phosphate and acid are reacted with one another at from 80 to 95° C,
   d) the reaction mixture is subsequently cooled to from 15 to 40° C, and
   e) finally the solids are separated off.

2. A process as claimed in claim 1, wherein the cooling process takes from 6 to 36 hours.

3. A process as claimed in claim 1 or 2, wherein the crude phosphate has a particle size below 1 mm.

4. A process as claimed in claim 1 or 2 or 3, wherein a compound providing for sulfide ions is added to the reaction mixture during the cooling or subsequent thereto.

**Revendications**

1. Procédé pour abaisser la teneur en acide sulfurique de l'acide phosphorique obtenu par le procédé par voie humide et réduire les impuretés contenues dans celui-ci, caractérisé en ce que
   a) l'on évapore l'acide phosphorique obtenu par le procédé par voie humide, qui présente une teneur en $P_2O_5$ de 30% en poids au maximum, jusqu'à une teneur de 33 à 38% en poids de $P_2O_5$,
   b) on ajoute, à l'acide ainsi évaporé, du phosphate naturel dans une quantité telle qu'après l'achèvement de la réaction, le rapport en poids de $SO_4^-$ dissous à $P_2O_5$ dans l'acide soit abaissé à 0,045 au maximum,
   c) on fait réagir le phosphate naturel et l'acide l'un avec l'autre à une température de 80 a 95° c,
   d) on refroidit ensuite le mélange réactionnel à une température de 15 à 40° C et
   e) on sépare enfin les matières solides.

2. Procédé selon la revendication 1, caractérisé en ce que l'opération de refroidissement dure de 6 à 36 h.

3. Procédé selon la revendication 1 ou 2, caractérisé en ce que le phosphate naturel présente une grosseur de grains de moins de 1 mm.

4. Procédé selon l'une quelconque des revendications 1 à 3, caractérisé en ce que pendant le refroidissement ou à la suite de celui-ci, un composé fournissant des ions sulfure est ajouté au mélange réactionnel.